Europäisches Patentamt

European Patent Office

Office européen des brevets

(11) Veröffentlichungsnummer: **0 636 900 A2**

## (12) EUROPÄISCHE PATENTANMELDUNG

(21) Anmeldenummer: **94111735.0**

(51) Int. Cl.6: **G01S 13/92**, G01S 7/02

(22) Anmeldetag: **27.07.94**

(30) Priorität: **30.07.93 DE 4325672**

(43) Veröffentlichungstag der Anmeldung:
**01.02.95 Patentblatt 95/05**

(84) Benannte Vertragsstaaten:
**AT BE CH DE DK ES FR GB GR IT LI LU NL SE**

(71) Anmelder: **SIEMENS AKTIENGESELLSCHAFT**
**Wittelsbacherplatz 2**
**D-80333 München (DE)**

(72) Erfinder: **von Pieverling, Klaus, Dr.**
**Remigerstrasse 1**
**D-82515 Wolfratshausen (DE)**

(54) Verfahren zur Geschwindigkeitsmessung und Klassifizierung von Fahrzeugen mittels eines Verkehrsradargerätes.

(57) Das Radargerät erfaßt vom erhöhten Standort aus einen Straßenbereich, wobei die Geschwindigkeit und die Klassifizierungsmerkmale des Fahrzeugs in unterschiedlichen Entfernungsbereichen bezüglich des Radargerätes erfaßt werden. Dabei werden die Geschwindigkeit in einem weiter abliegenden und der Fahrzeugumriß mindestens in einem nahegelegenen Entfernungsbereich erfaßt. Mit einer zusätzlichen Modulation des Radarsenders des Verkehrsradargerätes wird eine Entfernungsselektion durchgeführt und hiermit die Silhouette des Fahrzeugs zur Klassifizierung vermessen. Dabei können sowohl für die Geschwindigkeitsmessung als auch für Klassifizierung mehrere Antennenstrahlen vorgesehen sein. Für die Geschwindigkeitsmessung können sich überlappende Peilstrahlen verwendet werden. Zur Erzielung besserer Konturschärfe werden unter Nutzung von Methoden der >Peilschärfung die zur Klassifizierung gemessenen Radarsignale mit einem voraus berechneten zeitlichen Signalverlauf korreliert, welcher bestimmt ist durch Radarparameter, Aufstellungsgeometrie sowie der vorab gemessenen Geschwindigkeit des zu klassifizierenden Fahrzeugs.

FIG 3

EP 0 636 900 A2

Rank Xerox (UK) Business Services
(3.10/3.09/3.3.4)

Die Erfindung bezieht sich auf ein verfahren zur Geschwindigkeitsmessung und Klassifizierung von Fahrzeugen mittels eines Verkehrsradargerätes, welches vom erhöhten Standort aus einen Straßenbereich erfaßt.

Radargeräte finden bereits im Verkehrsbereich Anwendung, z.B. zur Erfassung des Verkehrsgeschehens auf Autobahnen oder anderen Straßenabschnitten. Hierzu wird beispielsweise auf einer Brücke über jeder Fahrspur ein Radargerät montiert, das alle durch den Radarstrahl fahrenden Fahrzeuge erfaßt und deren Geschwindigkeit mißt. Hierdurch ergibt sich ein Überblick über die laufende Verkehrslage. Dieselbe Aufgabe wird alternativ von induktiven Schleifen gelöst, die in die Fahrbahn eingegossen sind. Diese Schleifen können nun neben Geschwindigkeit zusätzliche nützliche Informationen liefern, z.B. die Länge und Bodenfreiheit des Fahrzeugs, also Informationen zur Klassifizierung der vermessenen Fahrzeuge, welche zur Verkehrsbeurteilung und Verkehrssteuerung von Bedeutung sind.

Es gibt bereits Methoden, um mittels eines Verkehrsradargerätes eine Fahrzeugklassifizierung durchzuführen. Beispielsweise ist in der DE-PS 33 06 040 C2 ein Verfahren zur automatischen Fahrzeugklassifizierung beschrieben, das als Dauerstichradar mit einer Auswertung des zurückkommenden dopplerverschobenen Signals arbeitet.Ferner ist aus der DE PS 40 41 149 C1 ein Verfahren zum Erfassen und Erkennen von unterschiedlichen Fahrzeugarten im fließenden Verkehr bekannt, bei dem zur Erfassung und Klassifizierung der die Meßstelle passierenden Fahrzeuge mittels eines oberhalb der Fahrbahn angeordneten Detektors der Abstand zwischen durchfahrendem Fahrzeug und Detektor in einer Vielzahl von aufeinanderfolgenden Messungen bestimmt wird, wobei ferner zur Substraktion dieses gemessenen Abstandes vom Abstand zwischen Fahrbahn und Detektor die Fahrzeughöhe berechnet wird und wobei schließlich durch Vergleich der sich aus der Vielzahl von Messungen ergebenden Fahrzeugsilhouette mit gespeicherten Mustersilhouetten die Fahrzeugart bestimmt wird.

Es wurde auch schon vorgeschlagen, zur Fahrzeugklassifizierung die Länge des Fahrzeugs aus der Zeitdauer,in der sich das Fahrzeug im Radarstrahl bewegt,und der gemessenen Geschwindigkeit zu ermitteln, wobei der Radardetektor oberhalb der Fahrbahn angeordnet ist. Diese Methode ist jedoch sehr ungenau, denn eine genaue Geschwindigkeitsmessung verlangt einen möglichst flachen Betrachtungswinkel, da vom Radargerät nur jeweils die Radargeschwindigkeitskomponente erfaßt werden kann. Ein flacher Betrachtungswinkel führt jedoch zur Verdeckung des Fahrzeugendes und verhindert somit eine genaue Längenmessung.

Aufgabe der Erfindung ist es, derartige Nachteile zu vermeiden und mit Hilfe eines speziellen Radarverfahrens die erforderlichen Informationen in effektiver Weise zu gewinnen.

Diese Aufgabe wird bei einem eingangs genannten Verfahren dadurch gelöst, daß die Geschwindigkeit und Klassifizierungsmerkmale des Fahrzeugs in unterschiedlichen Entfernungsbereichen bezüglich des Radargerätes erfaßt werden, wobei die Geschwindigkeit in einem weiter abliegenden und der Fahrzeugumriß mindestens in einem nahegelegenen Entfernungsbereich erfaßt werden.

Das erfindungsgemäße Verfahren verwendet ein Verkehrsradargerät mit zumindest zwei getrennten Strahlen für die Geschwindigkeitsmessung und Fahrzeugklassifizierung,nämlich einen flachen Radarstrahl für die Geschwindigkeitsmessung und einen steil nach unten gerichteten Radarstrahl für die Fahrzeugklassifizierung. Dabei ist in vorteilhafter Weise der Geschwindigkeitsradarstrahl so flach ausgerichtet, daß noch keine Abschattungsprobleme entstehen. Der zweite Radarstrahl ist praktisch senkrecht nach unten gerichtet und ermöglicht eine effektive Klassifizierung des Fahrzeugs, im einfachsten Fall aus einer genauen Längenmessung des Fahrzeugs.

In einer Weiterbildung der Erfindung ist das Verkehrsradargerät mit einem Radarsender ausgerüstet, der eine zusätzliche Modulation und damit eine Entfernungsselektion gestattet. Weist das Radargerät beispielsweise eine Pulsmodulation oder eine FM-CW-Modulation zusätzlich auf, so kann neben der Fahrzeuglänge auch die Höhe und das gesamte Profil des Fahrzeugs vermessen und damit klassifiziert werden.

Weitere Ausgestaltungsmöglichkeiten und Vorteile der Erfindung ergeben sich aus den weiteren Unteransprüchen und der Beschreibung der Erfindung, die im folgenden erläutert wird. Dabei zeigen

Fig. 1 ein bekanntes Verfahren mit einem Verkehrsdetektor an einer (Signal-)Brücke von oben und von der Seite gesehen,

Fig. 2 das erfindungsgemäße Verfahren mit einem Verkehrsradargerät mit zwei Radarstrahlen,

Fig. 3 mittels vier Radarstrahlen,

Fig. 4 mittels fünf Radarstrahlen,

Fig. 5 mittels azimutal versetzten doppelten Radarstrahlen,

Fig. 6 geometrische Verhältnisse für ein Verfahren mit erhöhter Konturenauflösung durch Peilschärfung,

Fig. 7 ein Blockschaltbild für die Auswertung und

Fig. 8 verschiedene Diagramme.

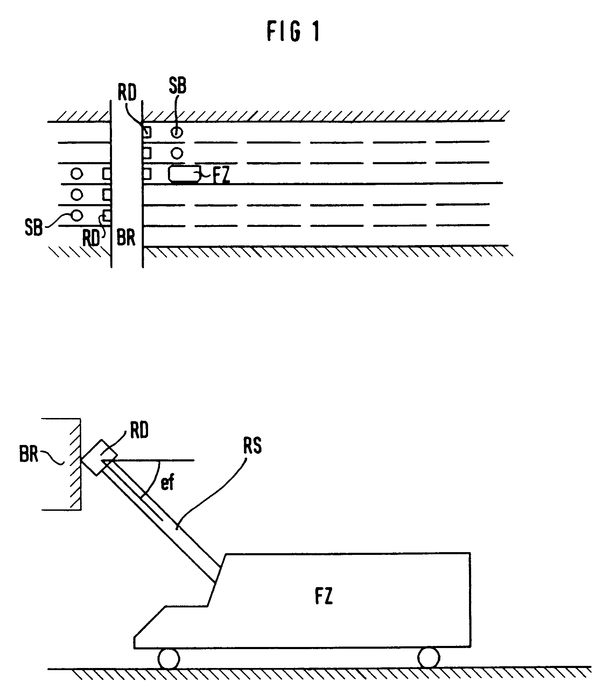

In Fig. 1 ist eine bereits bekannte Methode für eine Fahrzeugklassifizierung mittels eines Verkehrsradargerätes veranschaulicht. Der obere Teil der Fig. 1 zeigt einen Blick auf die Straße von oben. Radardetektoren RD sind beispielsweise auf einer Signalbrücke BR, für jede Fahrspur jeweils ein Radardetektor montiert und beleuchten einen Straßenbereich SB. Dort wird ein Fahrzeug FZ erfaßt, sobald es in den Radarstrahl RS gelangt, wie dies im unteren Teil der Fig. 1 in der Darstellung von der Seite her auf das Fahrzeug FZ, gezeigt ist. Dabei ist der Radarstrahl RS vom Radardetektor RD unter einem bestimmten Winkel ef auf das Fahrzeug FZ gerichtet. Die Fahrzeugklassifizierung wird aufgrund der Vermessung der Länge des Fahrzeugs vorgenommen. Die Fahrzeuglänge fzl ergibt sich aus der Zeitdauer tf multipliziert mit der Fahrzeuggeschwindigkeit vf.

$$fzl = tf * vf \qquad (1)$$

Wie bereits oben erwähnt, ist diese Methode gemäß der Fig. 1 sehr ungenau, weil eine genaue Geschwindigkeitsmessung einen möglichst flachen Betrachtungswinkel ef erfordert, da vom Radargerät bzw. Radardetektor RD nur jeweils die Radialgeschwindigkeitskomponente

$$vf * cos (ef) \qquad (2)$$

erfaßt werden kann. Dabei wird jedoch häufig ein Teil des Fahrzeugendes verdeckt, so daß keine sehr genaue Längenmessung möglich ist.

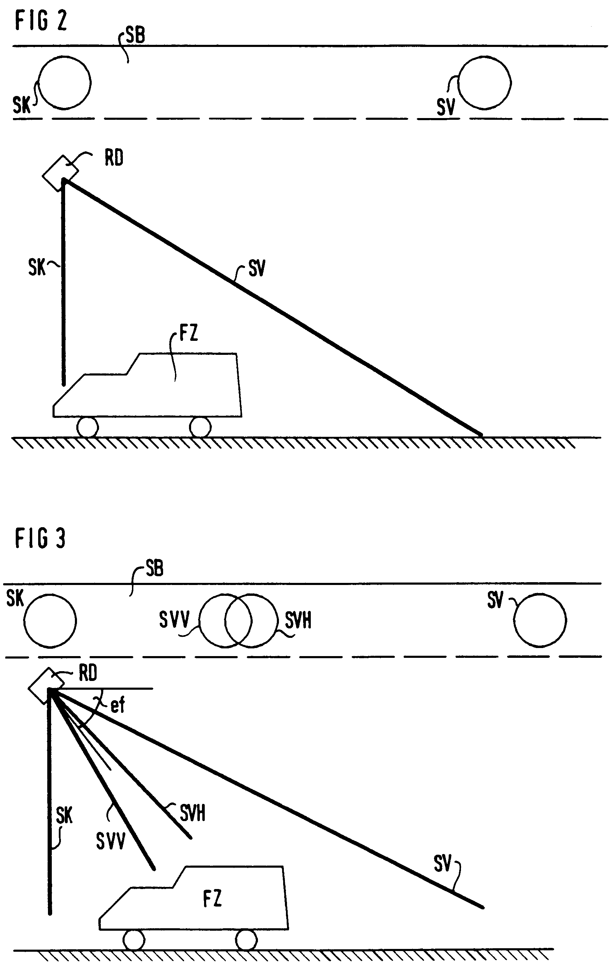

Das erfindungsgemäße Verfahren zur Fahrzeugklassifizierung ist prinzipiell in Fig.2 dargestellt. Dabei ist im oberen Bereich der vom Radardetektor RD beleuchtete Straßenbereich SB dargestellt. Der Radardetektor RD, wie im unteren Teil der Fig. 2 in Seitenansicht deutlich gezeigt, sendet zwei Radarstrahlen aus, einen flachen für die Geschwindigkeitsmessung, Radarstrahl SV und einen Radarstrahl SK für die Klassifizierung des Fahrzeugs FZ. Dabei ergeben sich im Straßenbereich SB zwei Abtastbereiche, die in Fig.2 oben mit SK und SV bezeichnet auch gezeigt sind.

Das in Fig. 2 gezeigte Verfahren läßt sich noch verbessern, wenn man neben den zwei Radarstrahlen noch zusätzliche Antennenstrahlen einsetzt. Die in Fig.2 gezeigte Optimierung der beiden Funktionen Geschwindigkeitsmessung (flacher Strahl SV) und Klassifizierung (steiler Strahl SK) führt dazu, daß Geschwindigkeitsmessung und Fahrzeugprofilmessung an unterschiedlichen Orten erfolgt. Diese Tatsache ist bei einem flüssigen Verkehr ohne Bedeutung, kann jedoch bei einem langsamen bzw. stockenden Verkehr dazu führen, daß die gemessenen und beispielsweise für Fahrzeuglängenmessung herangezogenen Geschwindigkeitsdaten sich nennenswert geändert haben, wenn das Fahrzeug den steilen Strahl SK durchläuft.

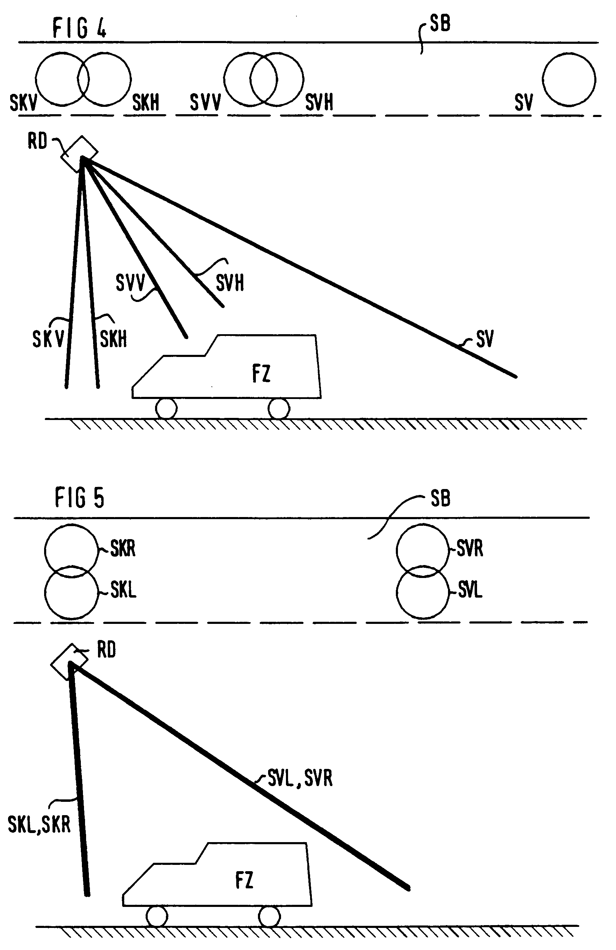

Um diesen Nachteil zu vermeiden, ist das Radargerät RD gemäß der Fig.3 mit einem zusätzlichen Strahlenpaar SVV und SVH ausgerüstet, welches, z.B. in einem Winkelbereich ef = 60°, die Straße SB beleuchtet. Mit diesem Strahlenpaar erfolgt eine Geschwindigkeitsmessung wesentlich näher an dem Bereich des senkrechten Strahls SK, allerdings mit dem Nachteil, daß die Fahrzeuggeschwindigkeit stark vom jeweiligen Winkel des Radarstrahls abhängt bzw. unter dem das Radarecho vermessen wird. Ein Beleuchtungswinkel von ca. 60° setzt einerseits einen sehr scharfen engen Radarstrahl voraus, der außerdem sehr sorgfältig justiert sein muß. Dieses Problem für eine genaue Geschwindigkeitsmessung mit beispielsweise einem 60°-Winkel wird gemäß der Anordnung nach Fig. 3 dadurch gelöst, daß zwei sich überlappende Meßstrahlen im Winkelbereich von 60° verwendet werden, nämlich ein erster Strahl SVV und ein zweiter Strahl SV, welche eine wesentlich genauere Bestimmung des Winkels, unter dem ein Radarecho empfangen wurde, durch Anwendung von einem Peilverfahren, beispielsweise Amplitudenvergleich der in den beiden Strahlen SVV und SVH empfangenen Echosignale gestattet. Der bei flüssigem Verkehr zur Geschwindigkeitsmessung eingesetzte flache Antennenstrahl SV kann dann zur Eichung der Peilstrahlen SVV und SVH verwendet werden, wodurch das Problem einer genauen geometrischen Justierung für diese Strahlen entfällt.

Eine Fortbildung des anhand der Fig.3 geschilderten Verfahrens ist in Fig.4 dargestellt. Hierbei wird der senkrechte Meßstrahl zur Klassifizierung in zwei Strahlen SKV und SKH aufgeteilt. Dieser Zusatzaufwand erfüllt zwei Aufgaben. Die senkrechte Ausrichtung erscheint zunächst optimal für die Erfassung des Fahrzeugprofils. Sie hat jedoch den praktischen Nachteil, daß das auf die Fahrbahn treffende Radarsignal mit extremer Energie in den Empfangszweig zurückgespiegelt wird. Eine somit zweckmäßige leichte Schrägrichtung, z.B. in oder gegen die Fahrtrichtung gemäß Fig. 4, verdeckt entweder die Heck- oder die Frontpartie des Fahrzeugs FZ. Die zwei nach unten gerichteten Strahlen SKV und SKH ermöglichen wahlweise optimalen Blick sowohl auf die Front- als auch auf die Heckseite des Fahrzeugs.

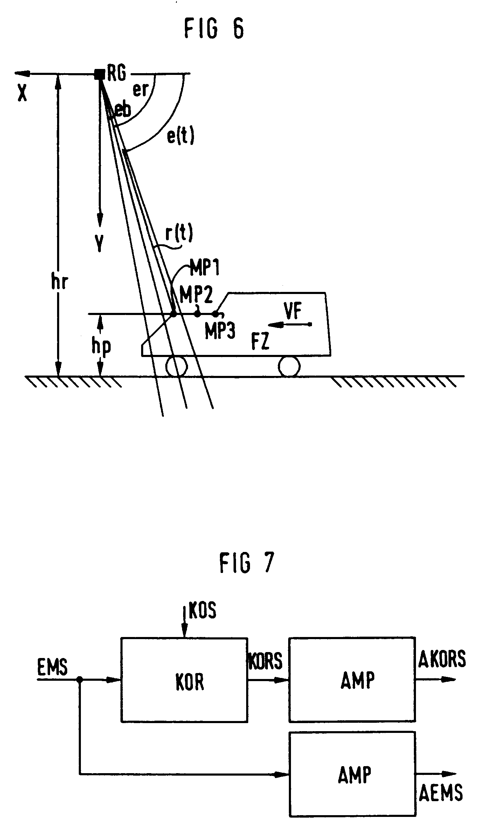

Eine weitere Ausgestaltung des erfindungsgemäßens Verfahrens wird anhand der Fig.5 erläutert, bei der neben der üblichen Seitenansicht oberhalb auch die Draufsicht auf den Straßenbereich dargestellt ist. Bei dieser Ausgestaltung der Erfindung sind sowohl der flache Geschwindigkeitsstrahl SV als auch der steile Klassifizierungsstrahl SK als azimutal versetzte Doppelstrahlen ausgebildet und entsprechend mit SVL und SVR bzw. SKL und SKR bezeichnet, was in der oberen Darstellung der Fig.5 deutlich wird. Hiermit kann nun unterschieden werden, ob das Fahrzeug FZ sich in der Spurmitte der Fahrbahn SB oder außerhalb der Spurmitte befindet. Je nach Abweichung von der Spurmitte kann eine Fahrzeugklassifizierung mit einem entsprechend, durch Linearkombination der beiden Strahlenhälften SKL, SKR modifizierten Gesamtstrahl erfolgen. Verzichtet man auf eine derartige Modifikation, so ist es vorteilhaft, keine rotationssymmetrischen Antennenkeulen zu verwenden, sondern elliptische Keulen mit einer hohen Bündelung in Fahrtrichtung und einer geringeren Bündelung in der Straßenquerrichtung, um möglichst unempfindlich gegenüber Fahrabweichungen von der Spurmitte zu werden.

Nun einige Ausführungen zum erfindungsgemäßen Verfahren. Für die Fahrzeugkonturenmessung kann mit einer adaptiven Radarwiederholfrequenz gearbeitet werden. Die Wiederholfrequenz fd ist ein charakteristischer Parameter bei Radargeräten mit Entfernungsselektionsmöglichkeiten. Diese Wiederholfrequenz wird im allgemeinen konstant gehalten, allenfalls betriebsartenabhängig umgeschaltet. Für die Profilmessung durch die steilen Antennenstrahlen SK,... entsprechend den Figuren 3 bis 5 bringt jedoch eine variable Wiederholfrequenz, die proportional zur vorher durch die Strahlen SV,... gemessenen Geschwindigkeit ist, attraktive Vereinfachungen. In diesem Fall kann dem Reziprokwert tr = 1/ft ein konstantes, geschwindigkeitsunabhängiges Streckeninkrement zugeordnet werden, d.h., man tastet die Fahrzeugsilhouette geschwindigkeitsunabhängig in konstanten Abstandsinkrementen ab.

Sämtliche nachgeschalteten Signalmanipulationen, z.B. Filter zur Konturglättung, arbeiten stets mit unveränderten Algorithmen und Parametern. Die Abtastrate ist zweckmäßigerweise in einer bestimmten, sinnvollen Relation zur Breite des Antennenstrahles gewählt. Beispielsweise wird man bei einer Antennenstrahlbreite von etwa 5° und einer Aufstellungshöhe von 5 m einen Abstand von mindestens 10 cm wählen. Die Strahlenbreite der Antenne bestimmt also die mögliche Erfassung von Einzelheiten der Fahrzeugkontur.

In der folgenden Beschreibung wird aufgezeigt, wie sich eine oben erwähnte Auflösung erheblich steigern läßt. Dabei wird eine als künstliche Strahlenschärfung bekannte Methode, auch als synthetische Apertur bezeichnet, benutzt. Es wird also durchh eine Peilschärfung eine erhöhte Konturenauflösung erreicht.

Wie bereits oben erwähnt,hängt die vom Radargerät aufgrund der Dopplerverschiebung gemessene Fahrzeug-Radialgeschwindigkeit von der Empfangsrichtung der Radarechos ab. Bei genauer Betrachtung ändert sich die Empfangsfrequenz eines Signalechos, während der Echopunkt den Strahlbereich der Antenne durchwandert. Diese Frequenzänderung ist umso ausgeprägter, je steiler die Antenne gerichtet ist. Dieser "Frequenzchirp" ist bestimmt durch die Betriebsfrequenz des Radargerätes, die Antennenstrahlbreite, die geometrische Ausrichtung der Antenne, den Abstand Radargerät - Meßpunkt und die Geschwindigkeit. Da all diese Parameter bekannt sind, läßt sich der Signalverlauf vorausberechnen.

Wenn man nun nicht einfach die Amplitude des Radar-Empfangssignals bestimmt, sondern den zeitlichen Verlauf des Empfangssignals mit dem zeitlichen Verlauf des vorausberechneten Empfangsignals korreliert, so lassen sich erhebliche Verbesserungen in der Fahrzeugkonturbestimmung erreichen: - genauere Meßergebnisse durch besseres Signalstörverhältnis - vor allem erheblich feinere Konturmessung, da diese Korrelation eine künstliche Schärfung des Antennenstrahls bewirkt. Diese Technik ist an sich bekannt zur Realisierung hochauflösender Radargeräte, z.B. zur Erstellung von Landkarten (Sidelooking-Radar).

Im folgenden wird der Vorgang anhand eines konkreten Beispiels näher erläutert. Die geometrischen Verhältnisse sind in Fig. 6 dargestellt. Der Standort des Radargerätes RG bzw. des Radardetektors befindet sich im Koordinatenursprung mit den Koordinatenachsen X und Y. Die Montagehöhe des Radargerätes ist mit hr bezeichnet und beträgt beispielsweise 6 m. Am Fahrzeug FZ sind mehrere Meßpunkte, die mit MP1 bis MP3 bezeichnet sind. Diese Meßpunkte liegen auf derselben Höhe. Die Höhe der Meßpunkte über der Straßenoberfläche ist hp bezeichnet und beträgt beispielsweise 0,5 m. Das Fahrzeug selbst hat eine Geschwindigkeit VF von beispielsweise 72 km pro Stunde. Die Neigung des Antennenstrahls bezüglich der Straße hat einen Winkel er von beispielsweise 85°. Die Halbwertsbreite des Antennenstrahls ist mit eb bezeichnet, z.B. 6°. Der laufende Winkel e (t) des Meßpunkts MP ist eine von der Zeit t abhängige Funktion. Die Wiederholfrequenz ft des Radargerätes bei einer Fahrzeuggeschwindigkeit von 72 km pro Stunde beträgt 10 KHz; die Radarwellenlänge 1r = 1,25 cm (24 GHz). xa = 3m, das entspricht einem x-Wert des Meßpunkts MP1 zum Zeitpunkt t = 0. Das Radarempfangssignal im Basisband (komplexes Signal) ist eine Funktion : S (t). Dabei beträgt die Realkomponente des Empfangssignals sx (t) und die Imaginärkomponente des Empfangssignals sy (t). Mit A (e(t)) ist die Amplitudencharakteristik der Antenne bezeichnet, der Proportionalitätsfaktor ist mit Ao bezeichnet. r(t) ist der Abstand Meßpunkt MP zum Radargerät RD.

Die Wiederholfrequenz 10 KHz ergibt bei 72 km/h (20 m/s) Geschwindigkeit ein Streckenabtastinkrement von 2 mm.

Der zeitliche Verlauf des Radarempfangssignales läßt sich in vereinfachter Form durch folgende

Beziehung wiedergeben.

$$S(t) = A(e(t))^*exp(j^*2^*2^* \, ^*r(t)/lr) \qquad (3)$$

Der erste Term repräsentiert die durch die Antennenbündelung erzeugte Amplitudenmodulation, der zweite die Dopplerfrequenz. Die Phase des Empfangssignales vollführt jedesmal dann eine Drehung um 360°, wenn sich der (geometrische) Abstand r(t) zum Radargerät um eine halbe Wellenlänge ändert. In diesem Falle hat sich der Echoweg $2^*r(t)$ also gerade eine ganze Wellenlänge verändert.

Der Abstand zum Radargerät errechnet sich

$$r(t) = \sqrt{(xa-vf^*t)^2 + ya^2} \qquad (4)$$

$$e(t) = arctan((xa-vf^*t)/ya) \qquad (5)$$

ya = hr - hp, (konstant) Y-Wert des Meßpunktes
Die Antennenrichtfunktion wird im weiteren als Cosinusquadratfunktion angesetzt.

$A(e(t)) = Ao^*(cos(\pi/2^*(er-e(t)))^2$ wobei er-eb ≦ e-(t)≦er + eb ist.

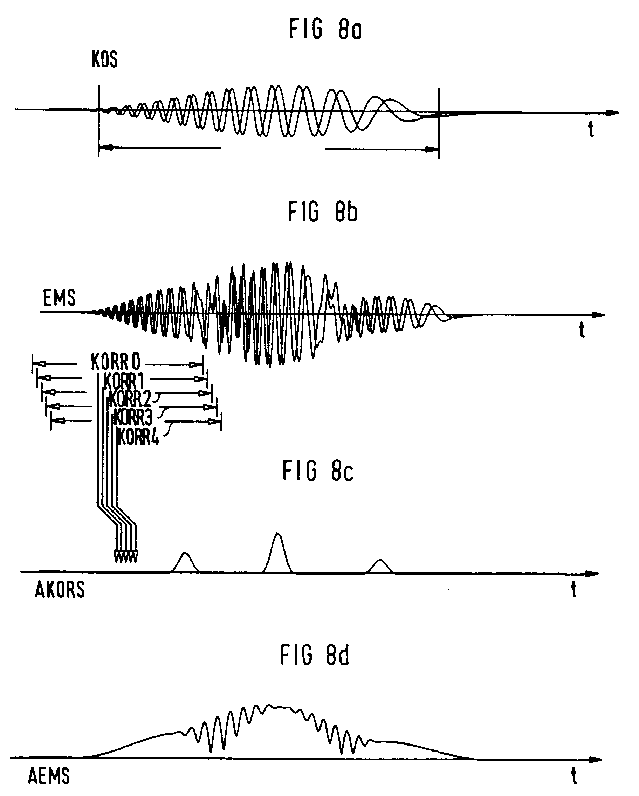

Der zeitliche Verlauf der beiden Signalkomponenten sx und sy ist in Fig.8a dargestellt. Man erkennt an den Abständen der Nulldurchgänge die unterschiedliche Dopplerfrequenz zu Beginn und am Ende des Signales. Dieses Signal ist das Echosignal des Meßpunkts MP1 gemäß der Fig. 6.

Der Signalverlauf eines Fahrzeugs entsteht durch Summierung aller im Strahlbereich der Antennen liegenden Meßpunkte (MP1,MP2,MP3,...).

In Fig. 7 ist schematisch in einem Blockschaltbild das Auswerteverfahren dargestellt. Das Empfangssignal EMS gemäß der Fig. 8b läuft in den Korrelator KOR. Als Empfangssignal EMS ist in Fig.8b eine Überlagerung von drei Meßpunkten MP1 bis MP3 mit unterschiedlichen Amplituden und x-Koordinaten gezeigt. Als Korrelationssignal KOS dient das Signal, wie es in dem Ausschnitt in der Fig.8a gezeigt ist.

Die Korrelation (KOR) wird überlappend durchgeführt, wie dies auch in Fig. 8b dargestellt ist: KRR0, KORR1 usw.. Mit Hilfe einer Amplitudenbildungseinrichtung AMP, die dem Korrelator KOR nachgeschaltet ist, wird als Korrelationsergebnis die Amplitude des korrelierten Signals AKORS gebildet. Dies ist in Fig. 8c veranschaulicht und man sieht deutlich die Korrelationsspitzen der drei Meßpunkte MP1 bis MP3. Im Vergleich dazu ist in Fig. 8d die Amplitude des Empfangssignals AEMS gezeigt. Eine Trennung der einzelnen Meßpunkte kann hier nur durch die Strahlenbündelung der Antenne erfolgen, die jedoch für die drei Meßpunkte gem. Fig. 8b unzureichend ist. Dies zur Veranschaulichung, um zu zeigen, daß lediglich mit einer Amplitudenbildung des Empfangssignals EMS, also unkorreliert, keine eindeutige Konturenbildung der Fahrzeuge möglich ist.

**Patentansprüche**

1. Verfahren zur Geschwindigkeitsmessung und Klassifizierung von Fahrzeugen mittels eines Verkehrsradargerätes, welches vom erhöhten Standort aus einen Straßenbereich erfaßt, **dadurch gekennzeichnet**, daß die Geschwindigkeit und die Klassifizierungsmerkmale des Fahrzeugs in unterschiedlichen Entfernungsbereichen bezüglich des Radargerätes erfaßt werden, wobei die Geschwindigkeit in einem weiterabliegenden und der Fahrzeugumriß mindestens in einem nahegelegenen Entfernungsbereich erfaßt werden.

2. Verfahren nach Anspruch 1, **dadurch gekennzeichnet**, daß mit einer zusätzlichen Modulation des Radarsenders des Verkehrsradargerätes eine Entfernungsselektion durchgeführt und daß hiermit die Silhouette des Fahrzeugs zur Klassifizierung vermessen wird.

3. Verfahren nach Anspruch 1, **dadurch gekennzeichnet**, daß sowohl für die Geschwindigkeitsmessung als auch für Klassifizierung mehrere Antennenstrahlen vorgesehen sind.

4. Verfahren nach Anspruch 1, **dadurch gekennzeichnet**, daß für die Geschwindigkeitsmessung sich überlappende Peilstrahlen verwendet werden.

5. Verfahren nach Anspruch 1 oder 2, **dadurch gekennzeichnet**, daß die Tastfrequenz des Verkehrsradargerätes proportional zur Geschwindigkeit des gemessenen Fahrzeugs gewählt wird.

6. Verfahren nach Anspruch 1 oder 2, **dadurch gekennzeichnet**, daß zur Erzielung besserer Konturschärfe unter Nutzung von Methoden der Peilschärfung die zur Klassifizierung gemessenen Radarsignale mit einem voraus berechneten zeitlich Signalverlauf korreliert werden, der bestimmt ist, durch Radarparameter, Aufstellungsgeometrie sowie der vorab gemessenen Geschwindigkeit des zu klassifizierenden Fahrzeugs.

7. Verfahren nach Anspruch 6, **dadurch gekennzeichnet**, daß die Korrelationsergebnisse mit vorab ermittelten Standardwerten verglichen werden, und daß dadurch eine Fahrzeugtypen-Einteilung erfolgt.

## FIG 1

FIG 2

FIG 3

FIG 4

SB

SKV    SKH    SVV    SVH    SV

RD

SVV

SVH

SKV    SKH

SV

FZ

FIG 5

SB

SKR

SVR

SKL

SVL

RD

SVL, SVR

SKL, SKR

FZ

FIG 6

FIG 7

## FIG 8a

KOS

t

## FIG 8b

EMS

t

KORR 0
KORR 1
KORR 2
KORR 3
KORR 4

## FIG 8c

AKORS

t

## FIG 8d

AEMS

t